# EUROPEAN PATENT APPLICATION

(11) **EP 3 035 607 A1**
(43) Date of publication of application: **22.06.2016**
(21) Application number: 15199733.5
(22) Date of filing: 14.12.2015
(51) Int. Cl.: H04L 12/46, H04L 29/08, H04L 12/931, H04L 12/851

(54) **SERVICE CHAIN MANAGEMENT**

(30) Priority: 15.12.2014 US 201414570484
(71) Applicant: Tieto Oyj, 00441 Helsinki (FI)
(72) Inventor: Syrjänen, Jukka, 33710 Tampere (FI); Vainikka, Markku, 37600 Valkeakoski (FI)
(74) Representative: Papula Oy

(57) **Abstract**

In telecommunications service chains are typically implemented as a chain of services implemented in a virtual environment. The service chain may be changed without causing unnecessary long delay to the operation of the chain by configuring the application implementing the service in the chain and then changing the output identifier of the previous application to correspond with the input identifier of the added application. The data traffic flow starts almost immediately to flow according to the new service chain and there will be no long delays caused by restarting the services but only a minimized delay.

## Description

### FIELD OF THE INVENTION

The invention relates to information technology and telecommunications. The invention relates particularly to managing service chains.

### BACKGROUND OF THE INVENTION

Traditionally network services, such as firewalls, deep packet inspection and intrusion detection system, were introduced into networks as expensive physical devices. These devices had to be integrated into the path of network data traffic flow with a time consuming, expensive and complicated integration project each time when a new network application was added to the path of network data traffic flow.

A solution for drawbacks caused by physical devices has been generally solved by using virtualization technologies. For example, by introducing network services as virtual machines and/or software implemented applications and connecting them together to form a network service or a service chain. Thus, new applications may be added and old removed from the chain without changing physical connections, such as cables. The expression service chain in this application is similar to the use of the term in ETSI NFV for a sequential configuration of a plurality of applications where subsequent applications are interconnected forming together an uninterrupted chain of individual service functionalities forming a service chain.

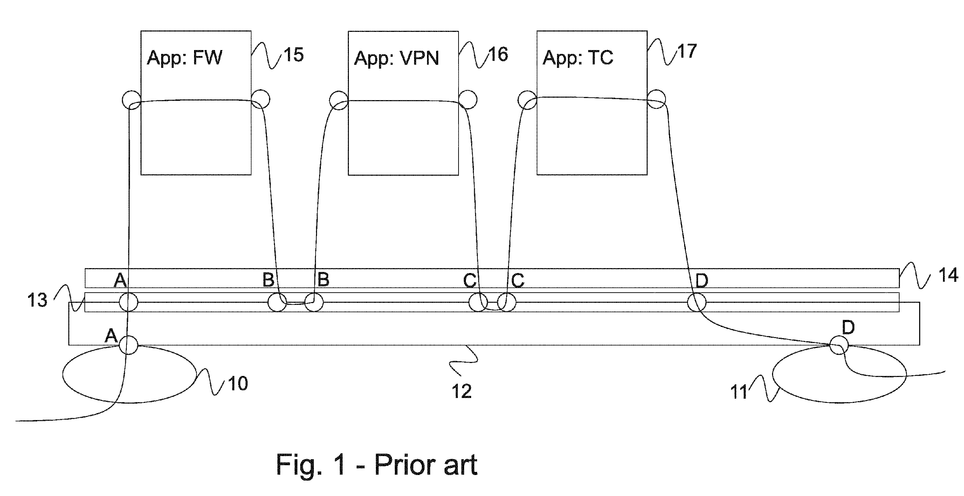

An illustration of a service chain according to the prior art can be seen in Figure 1. In figure 1 a service chain including Firewall (FW) 15, Virtual Private network (VPN) 16 and data traffic compression (TC) 17 is disclosed.

The application interfaces used in service chain internal connections (interconnect subsequent applications) are later referred to as external connection points (ECP). The application interfaces forming the end points of the service chain, thus connected for example, but not exclusively, to the existing datacenter network or another service chain, are later referred to as service external connection points (SECP).

Service chain is formed by connecting the subsequent applications 15, 16, 17 together in the hypervisor virtual switch 12 by using identical VLAN identifiers 14 (A, B, C, D in figure 1) in the virtual switch interfaces where the subsequent ECPs are connected to. The network data traffic flows through the whole service chain between service external network connections A and B.

Data traffic to the service chain is coming through a virtual switch port A, to which it is received from external network 10 or other service chains. At the switch port level 13 the incoming data traffic is provided with a tag or a destination address, such as virtual local area network identifier, A and the data traffic is then replicated to corresponding destination that leads into the first application, the firewall, in the service chain. After the first application has processed the data traffic, it is directed forward and tagged with destination address B and replicated again to B, which leads into the second application and so on. After the last application, in the example of figure 1, the data traffic is directed to address D, which leads out of the service chain to another service chain or external network 11. Thus, there is a continuous flow of data traffic through the chain.

If there is a need for change in the service chain the modifications may be pre-configured and then the pre-made configurations are applied by restarting the service chain. This typically takes some time the time needed depending on the services, however, typically it takes few minutes and such a long time is considered as a problem. Another solution for making changes is to define a new chain start it so that the old chain is connected until the new chain is operable. This will reduce the network data traffic cut time, however, this requires that the network element executing the chain is able to execute more than double number of the applications before the old chain is closed and the new chain is responsible for all data traffic. A drawback of this approach is that the network element may not be able to execute the needed number of applications.

Thus, there is a need for further solutions in service chain management so that so that the contents of service chains may be controlled without problems mentioned above.

### SUMMARY

In telecommunications service chains are typically implemented as a chain of services implemented in a virtual environment. The service chain may be changed without causing unnecessary long delay to the operation of the chain by configuring the application implementing the service in the chain and then changing the output identifier of the previous application to correspond with the input identifier of the added application. The data traffic flow starts almost immediately to flow according to the new service chain and there will be no long delays caused by restarting the services but only a minimized delay.

In an embodiment according to the present invention a method is disclosed. In the method first at least one application to be added into the service chain is configured. Then an input identifier for said at least one application is configured. Furthermore, an output identifier for said at least one application is configured, wherein said configured output identifier corresponds with the output identifier of the previous application in the service chain. After configurations the application is started. When the application has been started the output identifier of the previous application in the service chain is changed to correspond with the input identifier of said added application. In a further embodiment service applications are implemented as a virtual machine. An application may be a sub-chain of applications. In an embodiment the output identifier of the previous service chain or external network instead of previous application is used when said application is added as a first application in the chain.

In an embodiment the invention is implemented as a computer program embodied on a computer readable medium comprising code adapted to cause the method described above. In a further embodiment the invention is implemented as a device, apparatus or system configured to perform the method described above. The software described above may be used when performing the method.

A benefit of the invention is that the service chain and the applications in the service chain can be easily managed, for example by adding and removing applications. A further benefit of the invention is that the addition and removal processes do not cause long service breaks but are able to provide very fast switch. Furthermore, a benefit of the invention is that the process according to the present invention provides minimized packet loss during the switch over period and more data packets will be routed further. Thus, a smooth operation of the service chain can be provided all the time and at the same time the maintenance flexibility is increased.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an arrangement in accordance with the state of the art,
**Fig. 2a** is a block diagram of an embodiment in accordance with the present invention,
**Fig. 2b** is block diagram of an embodiment in accordance with the present invention,
**Fig. 3** is a flow chart of a method according to the present invention, and
**Fig. 4** is a block diagram of a network element according to the present invention.

### DETAILED DESCRIPTION OF THE INVENTION

Reference will now be made in detail to the embodiments of the present invention, examples of which are illustrated in the accompanying drawings.

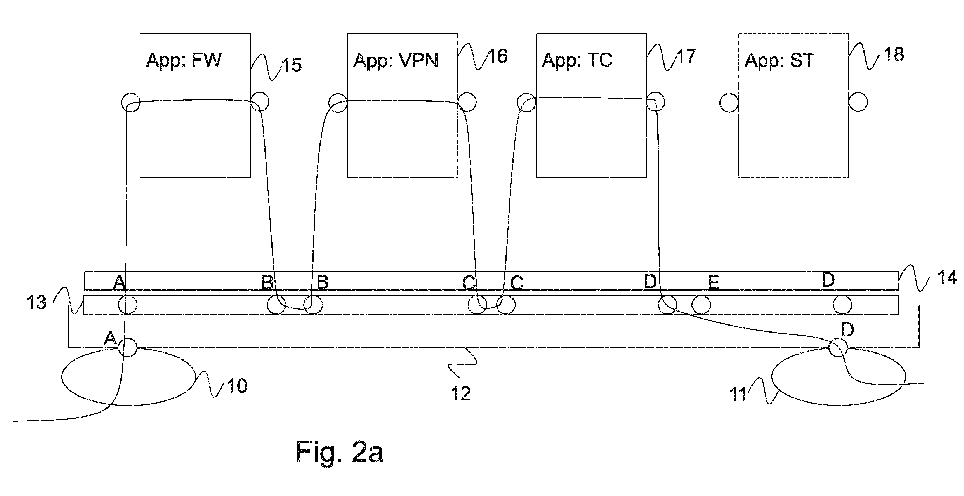

In figure 2a a block diagram of an embodiment according to the present invention is disclosed. In the embodiment fourth application 18 is added to the service chain that was discussed with referral to the prior art figure 1. According to the embodiment of the figure the new service is placed as the last in the chain and configured accordingly. The new application requires new VLAN identifiers that are placed in the virtual switch port level 13 so that during the configuration the data traffic flow from application 17 (TC) is routed to D and then replicated to D leading to next chain or network 11. Thus, the data traffic flow corresponds with the flow of Figure 1 and new application 18, for example a data traffic monitoring and statistics application ST, is not yet in the chain. Because of the use of virtual local area network the chain must be implemented within one physical network element. The network element may include more than one chain.

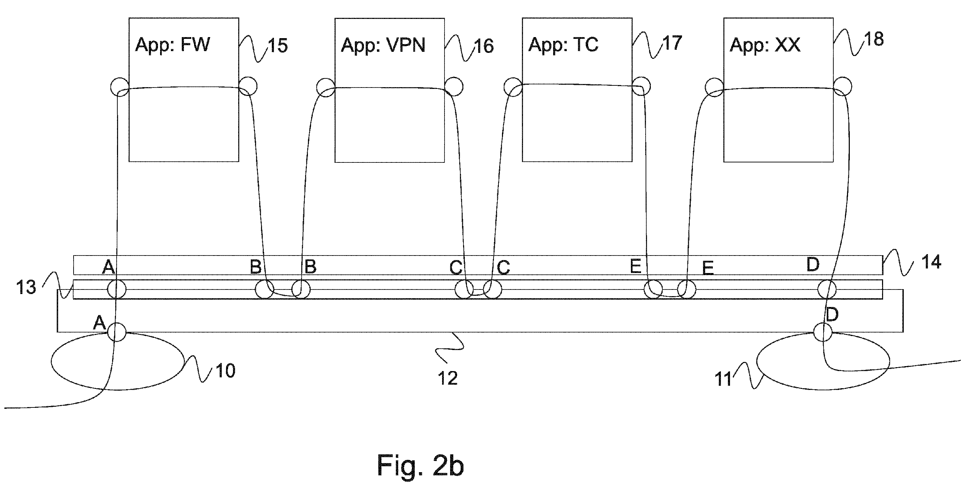

The application ST 18 is first configured and started. The input is provided with identifier E and the output is provided with identifier D. Thus, the data traffic from the new service 18 is replicated to the next chain or network 11. When the application ST 18 is ready to be used the output of application TC 17 is changed to identifier E. Thus, the data traffic starts almost immediately to flow through application ST 18. The change is fast and the flow having passed the output of application TC 17 before the change will be replicated to D that has been maintained as it was before the change. The flow after change is illustrated in figure 2b.

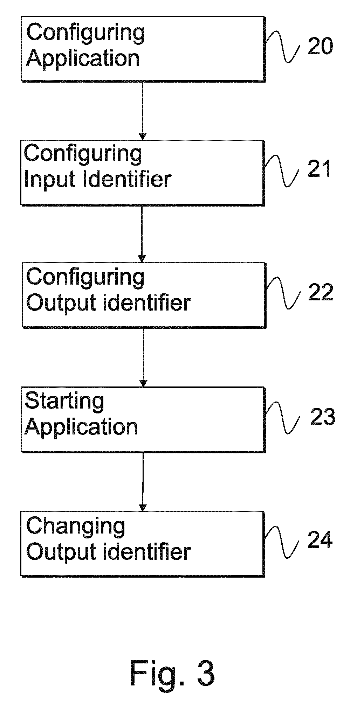

In figure 3 a method according to the present invention is disclosed. In the method an addition similar to the one disclosed in figures 2a and 2b may be performed. In the method first an application to be introduced is chosen and configured, step 20. The configuration in this step means first configuration of a virtual machine suitable for the application and then the internal configuration of the application as such. For example, if the application introduced is a firewall, the configuration involves introduction of data traffic rules or if the application is a statistics application the configuration involves indication what data is included in statistics and which kind of statistical analysis is performed. In other words, this step is only the application configuration and the service chain configuration will be described later. It should be understood that as the application configuration is independent from service chain configuration these configurations may be done simultaneously or in any preferred sequential order unless otherwise mentioned in this description.

After configuration of the application the input identifier is configured, step 21. The input identifier, such as a VLAN identifier, is the identifier E in figure 2a that is located before application 18. The data traffic flow in figure 2a is not flowing through this identifier as there is no output identifier E in figure 2a. The purpose of the output identifier is to guide the flow to the next application. The output identifier of application TC 17 is D at this stage. Thus, after passing through application TC 17 the data is transmitted to the external network or other service chain 11.

When the input identifier has been configured an output identifier is configured correspondingly, step 22. The output identifier is set to correspond with the output identifier of the previous application in the service chain. Thus, in output identifier will be D in figure 2a. Thus, when the data flow starts flowing through application ST 18, the output identifier will be D and the data will be transmitted to the external network or other service chain 11.

When all needed configurations have been done the application needs to be started, step 23. The starting may be independent from configuration of identifiers mentioned above. When the application is ready to use it will be introduced to the chain by changing the output identifier preceding the location in the chain, step 24.

In figure 2b the change of step is illustrated so that the output identifier of the application 17 is changed from D to E. As can be seen from figure 2b the data flow starts to flow through application 18 almost immediately and after execution of the application 18 it will be transmitted to the external network or next service chain 11.

In figures 2a, 2b and 3 an addition of one application is disclosed. Correspondingly a plurality of applications may be introduced. Thus, a sub-chain of plurality of applications may be introduced instead of one application. The difference to the embodiment of one application is that all of the applications must be ready for use before the change similar to step 24 of figure 3 is made.

Correspondingly an application may be removed from a chain by changing the output identifier. In the case of removal it must be noted that there may still be, and typically is, some data to be processed in the application to be removed. In such case the application may be terminated only after all of the data has flown through in order to avoid unnecessary packet loss. The removal disclosed above may be related also to replacing one or more application in a service chain by one or more different applications or application versions. For example, it may be desired that two applications replace one earlier application. When the application change is performed there will be few packets that need to be processed before the old application is closed. Correspondingly, there may be a need for restart when an application is upgraded to newer version. In such case the new version is first configured and as disclosed above and then changed into the chain so that the old version will be replaced and eventually terminated as disclosed above.

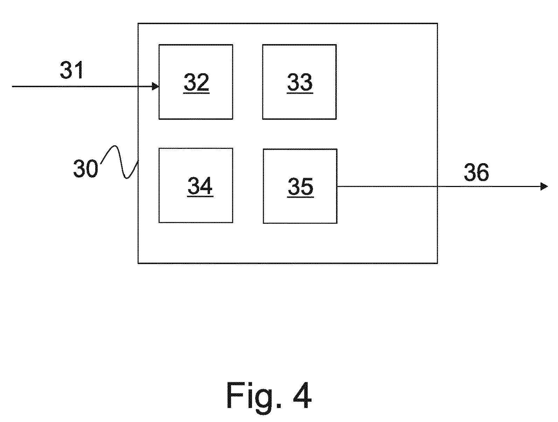

In figure 4 a network element 30 according to the present invention is disclosed. The network element receives incoming data traffic flow 31 by network connection 32. The network connection may be any conventional network connection, such as wired or wireless local area network adapter, mobile broadband adapter or similar. The network element includes a memory 33 and a processor 34 for processing the incoming data traffic flow according to the rules stored into the memory of the network element. The physical network element includes at least one virtual machine implementing a virtual network application that applies the rules to the data traffic. Virtual network applications may include firewall, compression, encryption, virtual private networks, statistical analysis and similar. After processing the network connection 35 is used for transmitting the data traffic flow 36 to the next network element or terminal device. The incoming and outgoing data traffic flows are not similar but the processing of the network element changes the data traffic flow going through the network element 30. For example, in an embodiment two services are used in a service chain. First, a firewall is used for filtering the undesired data traffic from the flow. Then the data traffic flow is compressed. Thus, after reducing the data in the flow the amount of data is reduced already before compression, which further reduces the amount of data. According to the present invention the chain may be now changed by introducing an encryption application as a last application in the chain. Thus, in the end the reduced data is encrypted and data traffic flow through the network element is changed.

The above mentioned method may be implemented as computer software which is executed in a computing device comprising the necessary components for receiving and sending data traffic flow. The components further include a processor for executing computer software and processing the data traffic flow and a memory for storing program code, execution time data and temporarily the data traffic flow when necessary. When the software is executed in a computing device it is configured to perform the above described inventive method. The software is embodied on a computer readable medium so that it can be provided to the computing device, such as the network element 30 of figure 4.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Bluray Disc, any other suitable optical medium, a RAM, a PROM, an EPROM, a FLASH-EPROM, any other suitable memory chip or cartridge, or any other suitable medium from which a computer can read.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method comprising:
configuring at least one application to be added into the service chain;
configuring an input identifier for said at least one application;
configuring an output identifier for said at least one application, wherein said configured output identifier corresponds with the output identifier of the previous application in the service chain;
starting said application; and
when said application has been started changing the output identifier of the previous application in said service chain to correspond with the input identifier of said added application.

2. A method according to claim 1, the method comprising managing a service chain in a network element including at least one network service application implemented as a virtual machine.

3. A method according to claim 1, wherein said at least one application is a sub-chain of at least two applications.

4. A method according to claim 1, wherein using the output identifier of the previous service chain or external network instead of previous application when said application is added as a first application in the chain.

5. A computer program embodied on a computer readable medium comprising code adapted to cause the following method when executed on a data-processing system:
configuring at least one application to be added into the service chain;
configuring an input identifier for said at least one application;
configuring an output identifier for said at least one application, wherein said configured output identifier corresponds with the output identifier of the previous application in the service chain;
starting said application; and
when said application has been started changing the output identifier of the previous application in said service chain to correspond with the input identifier of said added application.

6. A computer program according to claim 5, the method comprising managing a service chain in a network element including at least one network service application implemented as a virtual machine.

7. A computer program according to claim 5, wherein said at least one application is a sub-chain of at least two applications.

8. A computer program according to claim 5, wherein using the output identifier of the previous service chain or external network instead of previous application when said application is added as a first application in the chain.

9. A system comprising:
at least one network connection for receiving and transmitting data traffic flow;
a processor; and
a memory;
wherein said processor and memory are configured to:
configure at least one application to be added into the service chain;
configure an input identifier for said at least one application;
configure an output identifier for said at least one application, wherein said configured output identifier corresponds with the output identifier of the previous application in the service chain;
start said application; and
when said application has been started to change the output identifier of the previous application in said service chain to correspond with the input identifier of said added application.

10. The system according to claim 9, wherein said processor and memory are further configured to manage a service chain in a network element including at least one network service application implemented as a virtual machine.

11. The system according to claim 9, wherein said at least one application is a sub-chain of at least two applications.

12. The system according to claim 9, wherein said processor and memory are further configured to using the output identifier of the previous service chain or external network instead of previous application when said application is added as a first application in the chain.
